# FASCICULE DE BREVET EUROPEEN

(11) **EP 1 744 933 B1**
(45) Date de publication et mention de la délivrance du brevet: **06.08.2008**
(21) Numéro de dépôt: 05747058.5
(22) Date de dépôt: 21.04.2005
(51) Int. Cl.: B60R 13/02

(54) **ELEMENT D'HABILLAGE DESTINE A UN BORD D'ACCES EN TOLE D'UN VEHICULE AUTOMOBILE**
AUSSENMANTELELEMENT FÜR EINE BLECHZUGANGSKANTE EINES KRAFTFAHRZEUGES
OUTER SHELL ELEMENT FOR A SHEET METAL ACCESS EDGE PERTAINING TO A MOTOR VEHICLE

(30) Priorité: 05.05.2004 FR 0404828
(43) Date de publication de la demande: 24.01.2007
(73) Titulaire: Renault SAS, 92100 Boulogne Billancourt (FR)
(72) Inventeur: JOSSE, Pascal, F-78500 SARTROUVILLE (FR); LAURIE, John, F-78000 VERSAILLES (FR)
(86) Numéro de dépôt international: PCT/FR2005/050267
(87) Numéro de publication internationale: WO 2005/113294

(56) Documents cités:
- EP-A- 0 339 238
- EP-A- 0 829 393
- DE-C- 4 338 686
- DE-C- 4 434 481
- FR-A- 2 792 268

## Description

L'invention concerne un élément d'habillage destiné à un bord d'accès en tôle d'un véhicule automobile.

Ce type d'élément d'habillage est utilisé en particulier pour les parties d'encadrement en tôle délimitant une ouverture du véhicule, telle qu'une ouverture de porte ou de coffre. Il s'agit d'une pièce en matière moulée qui vient recouvrir ces parties d'encadrement peu esthétiques, à l'intérieur du véhicule. Le bord d'accès inférieur de ces parties d'encadrement doit alors être suffisamment rigide pour ne pas se déformer sous le poids d'une charge. A cet effet, les habillages conventionnels sont pourvus de nervures sur leur face opposée à la face visible, qui forment un appui rigide pour l'élément d'habillage. Ce nervurage nécessite des moules compliqués et pose des problèmes d'aspect dus à la formation de retassures.

Afin de simplifier le moulage de ce type d'élément d'habillage, le document FR-2 792 268 décrit un habillage réalisé en deux parties reliées par une charnière venue de matière avec ces parties. L'habillage, de forme courbée peut ainsi être moulé "à plat" de manière plus simple. La charnière, située au milieu de l'élément d'habillage, reste toutefois visible, ce qui nuit à l'esthétique, et peut fragiliser l'élément.

L'invention vise à pallier ces inconvénients en proposant un élément d'habillage d'un bord d'accès en tôle d'une ouverture de véhicule automobile assurant un appui rigide sur le bord sans nécessiter la réalisation de nervures, et présentant un bon aspect extérieur.

A cet effet, l'objet de l'invention concerne un élément d'habillage destiné à un bord d'accès en tôle d'une ouverture de véhicule automobile, réalisé par moulage et présentant au moins une paroi destinée à être fixée en regard et sensiblement parallèlement à une paroi sensiblement horizontale du bord en tôle, caractérisé en ce qu'il comprend au moins une butée de renfort, l'élément d'habillage et la butée étant pourvus de moyens de solidarisation permettant de placer la butée dans une position dans laquelle une de ses faces soit en appui contre le dessous de la paroi de l'élément d'habillage et que sa face opposée puisse venir en appui contre le dessus de la paroi horizontale du bord en tôle.

La ou les butées confèrent un bon appui et une bonne rigidité à l'élément d'habillage sans nécessiter la réalisation de nervurage, de sorte que le moule peut être simplifié et que le problème lié aux retassures est considérablement réduit, voire éliminé. La réalisation d'une ou plusieurs butées permet en outre de réduire la quantité de matière nécessaire pour mouler l'élément d'habillage et limite les écoulements lors du moulage.

Les moyens de solidarisation peuvent être des moyens de fixation démontables, tels que des moyens d'encliquetage ou d'emboîtement. La butée peut ainsi être réalisée indépendamment du reste de l'élément d'habillage et sa forme peut être adaptée à celle de chaque type de bord d'accès.

Dans un mode de réalisation particulier, les moyens de solidarisation sont formés d'une charnière d'articulation reliant le bord libre de la paroi de l'élément à un bord de la butée.

De préférence, la butée et la charnière sont venues de matière avec l'élément l'habillage de manière à simplifier la réalisation de celui-ci.

De préférence, la face de la butée destinée à venir en appui contre le dessous de la paroi de l'élément d'habillage ainsi que le dessous de la paroi de l'élément d'habillage sont pourvus de moyens d'encliquetage aptes à maintenir la butée en position repliée en appui contre cette paroi de l'élément d'habillage. Cette caractéristique permet de simplifier le montage de l'élément d'habillage sur le bord en tôle. La ou les butées peuvent en effet être maintenues en position repliée lors de la fixation de l'élément d'habillage sur le bord en tôle, ce qui permet d'éviter tout risque de mauvais montage.

Avantageusement, la face de la butée destinée à venir en appui contre la paroi du bord en tôle est sensiblement plane et/ou la face opposée de la butée présente des nervures de renforcement. La paroi plane permet de procurer un meilleur appui et une répartition des charges. Par ailleurs, la réalisation de nervures permet de réduire la quantité de matière et de renforcer la butée.

Avantageusement, lorsque l'élément d'habillage est destiné à un bord d'accès dont la paroi horizontale présente un bord longitudinal vertical équipé d'un joint, les épaisseurs de la butée et de la paroi de l'élément d'habillage sont suffisamment faibles pour permettre, en position d'appui de la butée, le recouvrement par le joint d'un bord libre de la paroi placé à proximité ou en butée contre le bord longitudinal. Il n'y a alors aucun risque que l'élément d'habillage ne détériore le joint, ce qui peut arriver dans le montage décrit dans le document FR-2 792 268, dans lequel l'élément d'habillage vient recouvrir le joint.

L'invention est maintenant décrite en référence aux dessins annexés, non limitatifs, dans lesquels :

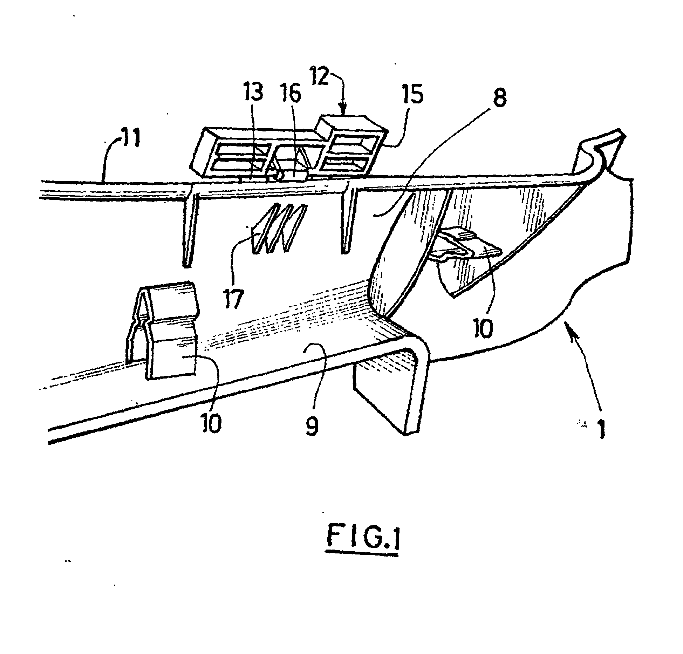

- la figure 1 est une vue en perspective de la face inférieure d'un élément d'habillage selon l'invention ;
- la figure 2 est une vue en coupe de l'élément d'habillage de la figure 1 monté sur un bord d'accès en tôle d'un véhicule automobile ;
- la figure 3 est une vue en coupe agrandie de la figure 2 montrant une butée de renfort de l'élément d'habillage.

Les figures représentent un élément d'habillage 1 destiné à recouvrir un bord d'accès en tôle 2 d'une ouverture de véhicule automobile.

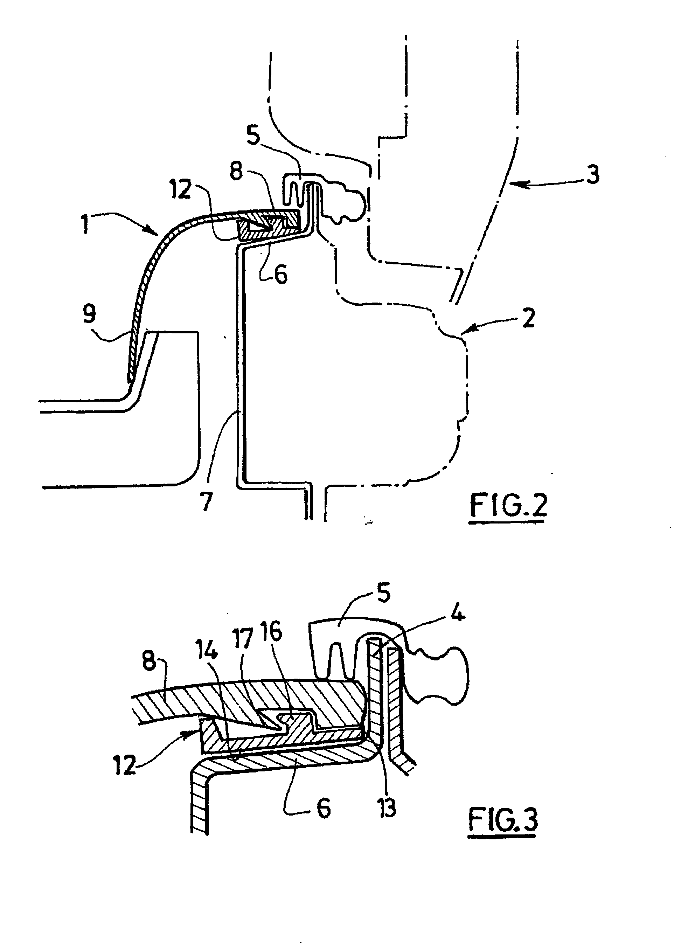

Dans l'exemple, ce bord d'accès 2 est le bord inférieur d'une ouverture pour une porte latérale 3. Il est formé d'un profilé creux en tôle formé de deux parties embouties assemblées suivant un bord longitudinal vertical 4 sur le bord duquel un joint d'étanchéité 5 de la porte est monté. Lorsqu'elle est fermée, la porte 3 vient en appui contre le joint 5 du bord longitudinal vertical 4, tel que représenté sur la figure 2. Du côté opposé à la porte 3, le bord d'accès 2 présente une paroi supérieure 6 sensiblement horizontale et une paroi latérale verticale 7 qui seront cachées par l'élément d'habillage 1.

L'élément d'habillage 1, réalisé par moulage, présente une forme courbe suivant sensiblement la forme du bord d'accès 2. En particulier, il présente une paroi supérieure 8 destinée à venir recouvrir la paroi supérieure horizontale 6 du bord, et une paroi latérale 9 destinée à cacher la paroi latérale verticale 7 du bord. Les parois 8 et 9 sont donc sensiblement perpendiculaires. Ces parois sont reliées par une partie arrondie pour présenter un meilleur aspect extérieur.

Sur leur face interne, destinée à être placée en regard du bord d'accès, les parois 8 et 9 sont pourvues de moyens de fixation 10 sur le bord d'accès 2. Ces moyens sont de préférence venus de matière avec l'élément d'habillage. Il s'agit par exemple de parties mâles coopérant avec des parties femelles complémentaires solidaires du bord d'accès (non représentées).

Sur le bord libre 11 de la paroi supérieure 8 de l'élément d'habillage, une butée de renfort 12 est articulée, sa charnière 13 étant venue de matière avec la butée et la paroi 8. La butée présente une forme sensiblement parallélépipédique comportant une face supérieure 14, de préférence plane, destinée à venir en appui contre le dessus de la paroi supérieure 6 du bord d'accès, et une face inférieure opposée 15 destinée à venir en appui contre le dessous de la paroi supérieure 8 de l'élément d'habillage. Cette face inférieure 15 est de préférence pourvue de nervures de renforcement.

La charnière 13 est conçue de manière à permettre le pivotement de la butée jusqu'à une position dans laquelle sa face inférieure 15 est en appui contre le dessous de la paroi supérieure 8 de l'élément d'habillage, sa paroi supérieure 14 pouvant alors reposer sur le dessus de la paroi supérieure 6 du bord d'accès.

La face inférieure 15 de la butée présente en outre une patte d'encliquetage 16 conformée de manière à coopérer avec une patte d'encliquetage 17 correspondante située sur le dessous de la paroi supérieure 8 de l'élément d'habillage.

La butée est ainsi repliée dans la position d'appui représentée sur les figures 2 et 3, et est maintenue dans cette position par les pattes d'encliquetage 16, 17. L'élément d'habillage peut alors être fixé sur le bord d'accès 2 au moyen des moyens de fixation 10. De préférence, le bord 11 de l'élément d'habillage vient en butée contre le bord longitudinal vertical 4 du bord d'accès, ou est situé suffisamment proche de celui-ci afin qu'une fois mis en place le joint de porte 5 recouvre ce bord 11, ainsi que la charnière 13. A cet effet, les épaisseurs de la butée et de la paroi supérieure 8 doivent être suffisamment faibles. La charnière 13 est alors invisible et protégée par le joint 5 sans risque de le détériorer (figures 2 et 3).

Dans un autre mode de réalisation non représenté, la butée peut être réalisée indépendamment de la paroi 8 de l'élément d'habillage et être maintenue en position par des moyens de fixation, tels que des moyens d'encliquetage, d'emboîtement, ou encore par vissage ou analogue. Elle peut alors être fixée à proximité ou à distance d'un bord libre de l'élément d'habillage en fonction des besoins.

Bien entendu plusieurs butées réparties le long du bord 11 peuvent être prévues afin d'assurer des points d'appui le long de l'élément d'habillage. Ce dernier peut ainsi subir des charges importantes, tels que le poids d'un passager ou d'un colis, sans se déformer.

## Revendications

1. Elément d'habillage (1) destiné à un bord d'accès en tôle (2) d'une ouverture de véhicule automobile, réalisé par moulage et présentant au moins une paroi (8) destinée à être fixée en regard et sensiblement parallèlement à une paroi sensiblement horizontale (6) du bord en tôle, **caractérisé en ce qu'**il comprend au moins une butée de renfort (12), l'élément d'habillage (1) et la butée (12) étant pourvus de moyens de solidarisation permettant de placer la butée dans une position dans laquelle une de ses faces (15) soit en appui contre le dessous de la paroi de l'élément d'habillage et que sa face opposée (14) puisse venir en appui contre le dessus de la paroi horizontale (6) du bord d'accès en tôle (2), et **en ce que** les moyens de solidarisation sont formés d'une charnière d'articulation (13) reliant le bord libre de la paroi de l'élément d'habillage à un bord de la butée (12).

2. Elément d'habillage selon la revendication 1, **caractérisé en ce que** la butée (12) et la charnière (13) sont venues de matière avec l'élément l'habillage.

3. Elément d'habillage selon l'une des revendications 1 ou 2, **caractérisé en ce que** la face (15) de la butée destinée à venir en appui contre le dessous de la paroi de l'élément d'habillage et le dessous de la paroi (8) de l'élément d'habillage sont pourvus de moyens d'encliquetage (16, 17) aptes à maintenir la butée en position d'appui contré cette paroi de l'élément d'habillage.

4. Elément d'habillage selon l'une des revendications 1 à 3, **caractérisé en ce que** la face (14) de la butée destinée à venir en appui contre la paroi du bord en tôle est sensiblement plane et/ou la face opposée (15) de la butée présente des nervures de renforcement.

5. Elément d'habillage selon l'une des revendications 1 à 4, destiné à un bord d'accès (2) dont la paroi horizontale (6) présente un bord longitudinal vertical (4) équipé d'un joint (5), **caractérisé en ce que** les épaisseurs de la butée (12) et de la paroi (8) de l'élément d'habillage sont suffisamment faibles pour permettre, en position d'appui de la butée, le recouvrement par le joint (5) d'un bord libre (11) de la paroi (8) placé à proximité ou en butée contre le bord longitudinal (4).

## Claims

1. Cladding element (1) intended for a sheet metal access edge (2) of a motor vehicle opening, made by moulding and having at least one wall (8) intended to be attached opposite and substantially parallel to a substantially horizontal wall (6) of the sheet metal edge, **characterized in that** it comprises at least one reinforcement abutment (12), the cladding element (1) and the abutment (12) being provided with means for fixed attachment making it possible to place the abutment in a position in which one of its faces (15) is resting against the underside of the wall of the cladding element and its opposite face (14) can rest against the top of the horizontal wall (6) of the sheet metal access edge (2), and **in that** the means of fixed attachment are formed of an articulation hinge (13) connecting the free edge of the wall of the cladding element to an edge of the abutment (12).

2. Cladding element according to Claim 1,
**characterized in that** the abutment (12) and the hinge (13) are made in one piece with and of the same material as the cladding element.

3. Cladding element according to one of Claims 1 or 2, **characterized in that** the face (15) of the abutment intended to rest against the underside of the wall of the cladding element and the underside of the wall (8) of the cladding element are provided with snap-fitting means (16, 17) capable of keeping the abutment in position resting against this wall of the cladding element.

4. Cladding element according to one of Claims 1 to 3, **characterized in that** the face (14) of the abutment designed to rest against the wall of the sheet metal edge is substantially flat and/or the opposite face (15) of the abutment has reinforcement ribs.

5. Cladding element according to one of Claims 1 to 4, intended for an access edge (2) whose horizontal wall (6) has a vertical longitudinal edge (2) whose horizontal wall (6) has a vertical longitudinal edge (4) fitted with a seal (5), **characterized in that** the thicknesses of the abutment (12) and of the wall (8) of the cladding element are sufficiently thin to allow, in the pressing position of the abutment, the overlapping by the seal (5) of a free edge (11) of the wall (8) placed close to or butting against the longitudinal edge (4).

## Patentansprüche

1. Verkleidungselement (1), das für einen Zugangsrand aus Blech (2) einer Öffnung eines Kraftfahrzeugs bestimmt ist, das durch Formen hergestellt wird und mindestens eine Wand (8) aufweist, die dazu bestimmt ist, gegenüber und im Wesentlichen parallel zu einer im Wesentlichen waagrechten Wand (6) des Blechrands befestigt zu werden, **dadurch gekennzeichnet, dass** es mindestens einen Verstärkungsanschlag (12) aufweist, wobei das Verkleidungselement (1) und der Anschlag (12) mit Verbindungsmitteln versehen sind, die es ermöglichen, den Anschlag in einer Stellung zu positionieren, in der eine seiner Seiten (15) in Anlage gegen die Unterseite der Wand des Verkleidungselements ist und seine gegenüberliegende Seite (14) in Anlage gegen die Oberseite der waagrechten Wand (6) des Zugangsrands aus Blech (2) kommen kann, und dass die Verbindungsmittel aus einem Gelenkscharnier (13) bestehen, das den freien Rand der Wand des Verkleidungselements mit einem Rand des Anschlags (12) verbindet.

2. Verkleidungselement nach Anspruch 1, **dadurch gekennzeichnet, dass** der Anschlag (12) und das Scharnier (13) aus einem Stück mit dem Verkleidungselement bestehen.

3. Verkleidungselement nach einem der Ansprüche 1 oder 2, **dadurch gekennzeichnet, dass** die Seite (15) des Anschlags, die dazu bestimmt ist, gegen die Unterseite der Wand des Verkleidungselements in Anlage zu kommen, und die Unterseite der Wand (8) des Verkleidungselements mit Einrastmitteln (16, 17) versehen sind, die fähig sind, den Anschlag in der Anlagestellung gegen diese Wand des Verkleidungselements zu halten.

4. Verkleidungselement nach einem der Ansprüche 1 bis 3, **dadurch gekennzeichnet, dass** die Seite (14) des Anschlags, die dazu bestimmt ist, gegen die Wand des Blechrands in Anlage zu kommen, im Wesentlichen eben ist, und/oder die gegenüberliegende Seite (15) des Anschlags Verstärkungsrippen aufweist.

5. Verkleidungselement nach einem der Ansprüche 1 bis 4, das für einen Zugangsrand (2) bestimmt ist, dessen waagrechte Wand (6) einen senkrechten Längsrand (4) aufweist, der mit einer Dichtung (5) versehen ist, **dadurch gekennzeichnet, dass** die Dicken des Anschlags (12) und der Wand (8) des Verkleidungselements gering genug sind, um in der Anlagestellung des Anschlags die Überdeckung eines freien Rands (11) der Wand (8) durch die Dichtung (5) zu erlauben, der in der Nähe oder in Anschlag gegen den Längsrand (4) angeordnet ist.
